Europäisches Patentamt

European Patent Office

Office européen des brevets

(11) Veröffentlichungsnummer: **0 406 159 A1**

## (12) EUROPÄISCHE PATENTANMELDUNG

(21) Anmeldenummer: 90810382.3

(22) Anmeldetag: 25.05.90

(51) Int. Cl.⁵: **B65G 1/10**, //B65G7:04

(30) Priorität: 29.06.89 DE 3921357

(43) Veröffentlichungstag der Anmeldung:
02.01.91 Patentblatt 91/01

(84) Benannte Vertragsstaaten:
AT BE CH DE DK ES FR GB GR IT LI LU NL SE

(71) Anmelder: **WALTER STOCKLIN AG**
**Dornacherstrasse 197**
**CH-4147 Aesch(CH)**

(72) Erfinder: **Haldimann, Hans-Rudolf**
**Piazza Bossi 5**
**CH-6900 Lugano(CH)**

(74) Vertreter: **Rottmann, Maximilian R.**
**c/o Rottmann, Zimmermann + Partner AG**
**Glattalstrasse 37**
**CH-8052 Zürich(CH)**

(54) Rolluntersatz.

㉗ Der Rolluntersatz weist einen rechteckigen Rahmen auf, welcher auf jeder Seite mit einer Anzahl Rollen (7 - 10) versehen ist. Die Rollen sind in Gruppen (I, II) zusammengefasst, so dass in jeder Gruppe mindestens zwei Rollen (7, 8; 9, 10) vorhanden sind. Beim Überfahren einer Bodenquerrille (21) wird die sich im Bereiche der Querrille befindliche Rolle durch die zugehörige Rolle der gleichen Gruppe entlastet, so dass das Überfahren von Querrillen problemlos erfolgen kann. Mehrere verschieden grosse Rolluntersätze sind so ausgebildet, dass bei jedem Rolluntersatz der Abstand von zwei ausgewählten, verschiedenen Gruppen zugeordneten Rollen einem vorbestimmten Wert (a) entspricht, welcher mit dem Abstand der Ketten (17, 18) eines Kettenförderers zur Querverschiebung der Rolluntersätze übereinstimmt.

FIG.1

FIG. 3

## ROLLUNTERSATZ

Die vorliegende Erfindung bezieht sich auf einen Rolluntersatz, der einen mit Rollen versehenen rechteckigen Rahmen aufweist, sowie auf eine Trabsporteinrichtung mit mehreren, verschieden langen Rolluntersätzen.

Rolluntersätze der hier zur Rede stehenden Art werden zur Behandlung von palettisierten Gütern verwendet, meistens in Verbindung mit Kettenförderanlagen und Durchlaufregallager-Anlagen, wobei die einzulagernden Güter auf die Rolluntersätze abgestellt und zusammen mit dem Untersatz im Regal eingelagert werden. Da die Rolluntersätze leicht manipulierbar sind, erübrigt sich manchmal der Bau von Förderbändern oder ähnlichen Transporteinrichtungen, wobei es aber wesentlich ist, dass die Rolluntersätze sehr niedrig mit geringer Bodenfreiheit gebaut werden.

Bekannt sind Rolluntersätze mit einem mit Rollen versehenen rechteckigen Rahmen, wobei zur Verschiebung meistens eine Handdeichsel vorhanden ist, die als Hebelroller ausgebildet werden kann, wie dies z.B. im CH-Patent 599 889 beschrieben ist.

Die bekannten Rolluntersätze weisen den Nachteil auf, dass sie nicht im Stande sind, in den Boden eingelassene Rillen oder Schienenunterbrüche zu überfahren. Auch wenn die Unterbrüche nur einige Millimeter betragen, wirken diese sehr störend, da solche Rolluntersätze möglichst kleine Rollen besitzen sollen. Da die Rolluntersätze sehr niedrig gehalten werden müssen, ist es nicht möglich, anstelle von kleinen Rollen grössere Rollen zu verwenden, da dadurch gleichzeitig die Bauhöhe des Rolluntersatzes unerwünscht vergrössert wird. Für die sehr interessante Verbindung von Lagerkanälen mit Verteilwagen oder anderen einfachen Übernahmegeräten wären aber Schienenunterbrüche von bis zu einigen Zentimetern wünschenswert.

Ein weiterer Nachteil besteht darin, dass bei bestehenden Kettenförderanlagen zum manchmal erforderlichen, automatischen Quertransport der Rolluntersätze der Achsabstand derselben durch die Entfernung die Transportketten vorgegeben ist, so dass verschieden grosse Rolluntersätze nicht verwendet bzw. nicht mit dem gleichen Kettenförderer transportiert werden können.

Zweck der Erfindung ist es, einen Rolluntersatz, bestehend aus einem mit Rollen versehenen rechteckigen Rahmen, so zu verbessern, dass dieser unter Beibehaltung einer sehr niedrigen Bauhöhe sich zum Überfahren von rinnenförmigen Unterbrüchen im Boden oder von Schienenstössen mit einer Breite bis zu einigen Zentimetern eignet.

Diese Aufgabe wird erfindungsgemäss mit Hilfe eines Rolluntersatzes gelöst, welcher die im Patentanspruch 1 aufgeführten Merkmale aufweist.

Der vorgeschlagene Rolluntersatz mit einem rechteckigen Rahmen weist also mindestens zwei Paar Rollen am einen und zwei Paar Rollen am anderen Ende des Rolluntersatzes auf. Beim Überfahren einer Rille oder eines Schienenunterbruchs wird diese bzw. dieser zunächst von den beiden in der Fahrtrichtung vorderen, in der gleichen Querrichtung liegenden Rollen erreicht, welche dann über der Rille bzw. über dem Unterbruch durch die nachfolgenden Rollen entlastet werden. Auf der anderen Seite der Rille bzw. des Unterbruchs kommen diese vorderen Rollen wieder am Boden zur Auflage. Anschliessend erreichen die beiden dahinter liegenden, gleichachsig angeordneten Rollen die Rille bzw. den Unterbruch, werden durch die beiden vorderen Rollen entlastet, überqueren die Rille bzw. den Unterbruch und werden wieder am Boden bzw. von der Schiene abgestützt. Dieser Vorgang wiederholt sich beim Überqueren der Rille bzw. des Schienenunterbruchs durch die hinteren Rollenpaare. Voraussetzung ist dabei, dass die Rollen so ausgelegt sind, dass ein gleichachsiges Rollenpaar die ihm zukommende Teillast immer tragen kann, wenn das andere Rollenpaar über der Rille oder dem Unterbruch steht.

Bei einer solchen Ausführung des Rolluntersatzes ist es ferner möglich, verschieden grosse Rolluntersätze mittels parallel zueinander verlaufender Förderketten in der Querrichtung zu transportieren, indem zwei gleichachsig angeordnete Rollen der vorderen Rollengruppe und zwei gleichachsig angeordnete Rollen der hinteren Rollengruppe von einem Förderkettenpaar ergriffen werden.

Bei geeigneter Wahl des Rollenabstands innerhalb einer Gruppe und der Entfernung der beiden Gruppen ist es möglich, verschieden grosse Rolluntersätze mit dem gleichen Kettenförderer zu fördern. Voraussetzung ist, dass bei jedem Rolluntersatz auf beiden Seiten des Rahmens in der ersten Gruppe eine Rolle vorhanden ist, deren Abstand von einer Rolle der zweiten Gruppe einen vorbestimmten Wert beträgt, welcher für sämtliche Rolluntersätze gleich ist und der Entfernung der Ketten des Kettenförderers entspricht.

Demzufolge betrifft die Erfindung ferner eine Transporteinrich tung mit mehreren, verschieden langen Rolluntersätzen nach Patentanspruch 1, die mittels zweier parallel geführter Ketten eines Kettenförderers quer verschiebbar sind. Diese Transporteinrichtung zeichnet sich durch die im Patentanspruch 2 definierten Merkmale aus.

Aus der DE-PS 31 41 062 ist zwar bereits ein auf Rollen laufender Wagen bekannt geworden, welcher je vier Rollen aufweist, die in zwei Reihen angeordnet sind. Dieser Wagen sollte jedoch zum Fahren sowohl auf Schienen als auch auf ebenem Boden geeignet sein und weist demnach auf beiden Seiten je in einer ge meinsamen Halterung gelagerte Rollenpaare auf, die eine grössere Rolle und eine kleinere Rolle umfassen. Die kleineren Rollen kommen nur im Schienenbetrieb zur Geltung, indem sie Schwenkbewegungen der grossen Rollen auf den Schienen verhindern. Wenn dagegen der Wagen auf schienenfreiem Boden geschoben oder gezogen wird, so läuft er nur auf den grossen Rollen. Diese Patentschrift enthält also weder die gestellte Aufgabe noch deren Lösung gemäss der Erfindung.

Zum Stande der Technik gehört ferner die US-PS 3,558,152, aus welcher ein Rolluntersatz mit quadratischem Rahmen bekannt geworden ist, wobei in den Rahmenecken Rollen angeordnet sind. Darüber hinaus ist in der Mitte von zwei gegenüber liegenden Rahmenseiten je ein Rollenpaar in einem gemeinsamen Halter vorgesehen, um welchen der Rahmen des Rolluntersatzes schwenkbar ist. Die Anordnung ist dabei so getroffen, dass der Rahmen auf den in der Mitte angeordneten Rollen ruht, während die in den Ecken angeordneten Rollen nur bei einer Schwenkung des Rahmens um die Querachse wahlweise als Stützen zum Einsatz kommen. Diese Anordnung dient zur Erleichterung der Manipulation des Rolluntersatzes. Auch bei dieser Ausführung ist weder die durch die Erfindung gestellte Aufgabe noch die getroffene Lösung vorhanden.

Zur näheren Erläuterung der Erfindung wird auf die beiliegende Zeichnung hingewiesen, welche ein Ausführungsbeispiel des Erfindungsgegenstands darstellt. Es zeigen:

Fig. 1 die Seitenansicht eines Rolluntersatzes;

Fig. 2 eine nur schematisch gezeichnete Handdeichsel, welche in Verbindung mit dem Rolluntersatz gebraucht werden kann; und die

Fig. 3 - 5 die Verwendung des Rolluntersatzes in Verbindung mit einem Kettenförderer.

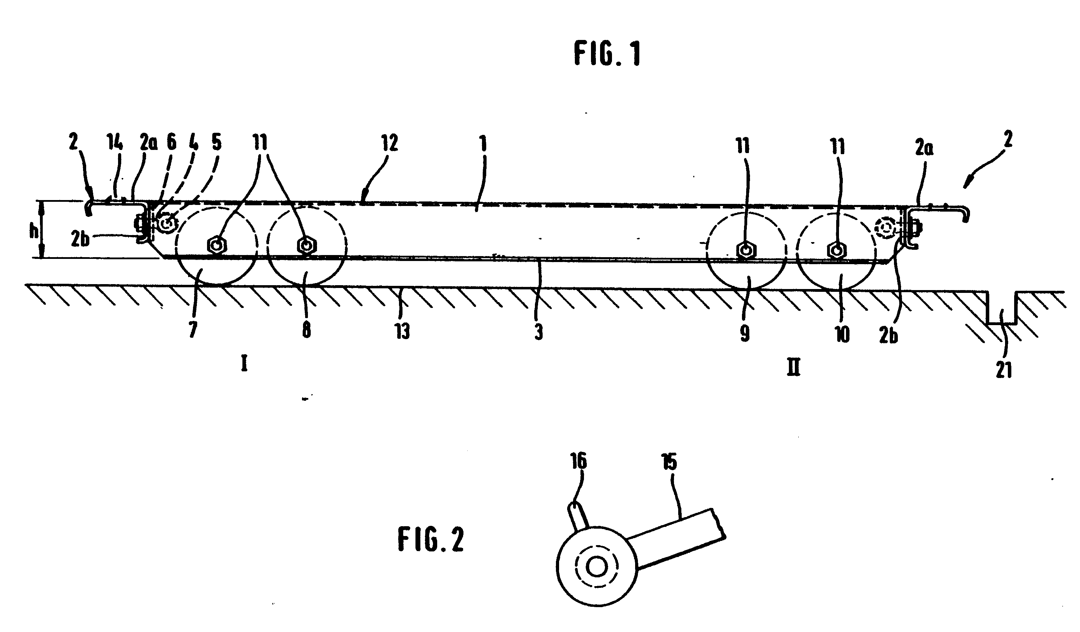

Der in Fig. 1 in Seitenansicht gezeigte Rolluntersatz weist einen rechteckigen Rahmen auf, der aus zwei parallelen Längsträgern 1 und aus zwei rechtwinklig dazu verlaufenden Querträgern 2 besteht. Die Längsträger 1 sind im Querschnitt hutförmig ausgebildet und weisen Verstärkungsränder 3 auf, während die Querträger 2 im Querschnitt U-förmig mit ungleich langen Schenkein geformt und so an beiden Enden der Längsträger 1 befestigt sind, dass der Steg 2a der Querträger horizontal, der längere Schenkel 2b senkrecht dazu verläuft. Die Verbindung erfolgt durch Schrauben 4, Bolzen 5 und einer Zwischenplatte 6, mittels welcher die Querträger 2 an der Frontpartie der Längsträger 1 festgemacht werden.

Der Rolluntersatz ist ferner auf jeder Seite mit vier Rollen 7 - 10 versehen. Der Radius der Rollen ist kleiner als die Höhe h der Längsträger 1. In dieser Weise wird eine sehr niedrige Bauweise erreicht, indem die Drehachse 11 der Rollen sich in einer solchen Höhe bezüglich des Rahmens befindet, dass der Abstand zwischen der oberen Auflagefläche 12 des Rahmens und der unteren Bodenauflage 13 der Rollen kaum grösser ist als der Rollendurchmesser.

Die auf einer Seite des Rahmens angeordneten Rollen sind in zwei Gruppen I und II zusammengefasst. Die erste Gruppe I bildet die Rollen 7 und 8, und die zweite Gruppe II wird durch die Rollen 9 und 10 gebildet. Die eine Gruppe I ist am einen Ende und die andere Gruppe II am anderen Ende des Längsträgers 1 direkt im Träger um die Drehachse 11 gelagert.

Der Rolluntersatz kann mit Hilfe einer Deichsel 15 geführt werden, welche an und für sich bekannt und in Fig. 2 schematisch dargestellt ist. Die Deichsel 15 ist mit einem Zapfen 16 ausgerüstet, welcher in eine Ausnehmung 14 des horizontalen Schenkels 2a des Querträgers 2 eingreifen kann.

Der Rolluntersatz ist vorzüglich geeignet, um eine Rille im Boden oder einen Übergang zwischen zwei Schienen bzw. von einem Schienenende auf einen Verteilwagen zu überfahren. Die Rollen 7, 8, 9 und 10 sind so ausgelegt, dass immer eine Rolle allein die ihr zukommende Teillast tragen kann, wenn die andere Rolle des Rollenpaares direkt über dem Unterbruch steht. Bei einer Förderrichtung von links nach rechts (Fig. 1) werden beim Erreichen der Bodenquerrille 21 die Rollen 10 durch die Rollen 9 des Rollenpaares entlastet und sinken nicht in die Bodenrille 21 ein, sondern überqueren diese. Anschliessend werden die Rollen 9 durch die Rollen 10 entlastet, welche bereits die Rille 21 überquert haben. In dieser Weise können in den Boden eingelassene Rillen leicht und problemlos überwunden werden.

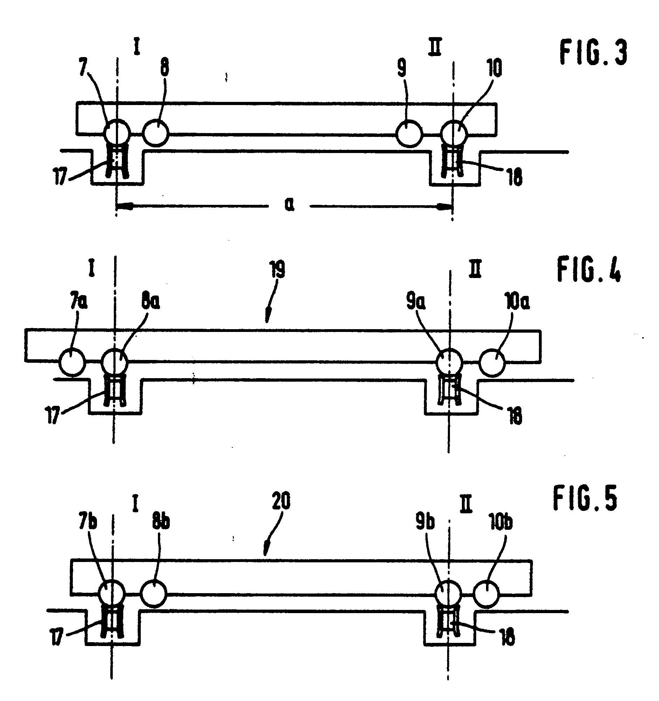

Der vorgeschlagene und beschriebene Rolluntersatz kann auch in einfacher Weise mittels eines Kettenförderers in der Querrichtung transportiert werden. Gemäss Fig. 3 ist ein Kettenförderer vorgesehen, welcher zwei parallel laufende Ketten 17 und 18 aufweist, die in einem bestimmten Abstand a voneinander angeordnet sind. Dieser Abstand entspricht dem Abstand der beiden äusseren Rollen 7 und 10 der Gruppen I und II voneinander. Es ist aber gemäss Fig. 4 auch möglich, mit dem gleichen Kettenförderer bei unverändertem Abstand a der Ketten 17 und 18 einen grösseren Rolluntersatz 19 zu fördern, bei welchem der Abstand der beiden inneren Rollen 8a und 9a der Gruppen I und II voneinander dem Abstand a der Ketten 17 und 18 entspricht. Als dritte Möglichkeit gemäss Fig. 5 besteht die Förderung eines Rolluntersatzes 20, bei welchem der Abstand der äusseren Rollen 7b von der inneren Rollen 9b wiederum den Abstand a der Ketten entspricht. Damit ist es möglich, mit dem gleichen Kettenförderer drei verschiedene Rolluntersätze, z.B. mit 80, 100 oder 120 cm Länge, in der Querrichtung zu fördern.

Die Elastizität der Längsträger und der Rollen genügt, um ohne weiter Hilfsmittel eine gleichmässige Verteilung der Last auf die Rollen zu erzielen, so dass jede Rolle nur mit einem Achtel des Gesamtgewichts belastet wird. Der Rollendurchmesser kann also klein gehalten werden und der Rolluntersatz hat dieselbe Auflagehöhe über die gesamte Oberfläche hinweg. Eine kurzzeitig höhere Belastung einer Rolle beim Überfahren eines Unterbruchs mit der zugeordneten Rolle bleibt im zulässigen Rahmen.

Schliesslich können auf jeder Seite drei oder mehrere Rollen in Gruppen zusammengefasst werden so dass noch mehr Grössenvarianten for die Rolluntersätze zur Verfügung stehen, die alle mit dem gleichen Kettenförderer bewegt werden können. Prinzipiell muss bei einer Transporteinrichtung, welche eine grössere Anzahl Rollenuntersätze umfasst, bei jedem Rollenuntersatz eine ausgewählte Rolle in der ersten Gruppe auf beiden Seiten des Rahmens vorhanden sein, deren Abstand von einer ausgewählten Rolle der zweiten Gruppe einen vorbestimmten für sämtliche Rolluntersätze gleichen Wert beträgt, welcher der Entfernung der Ketten des Kettenförderers entspricht.

Es sei schliesslich erwähnt, dass die beschriebenen Rolluntersätze auf sehr engem Raum gestapelt werden können, indem jeder zweite Rolluntersatz leicht seitlich versetzt wird, so dass die Stapelhöhe pro Rolluntersatz nur die Hälfte der effektiven Höhe betragen wird.

## Ansprüche

1. Rolluntersatz mit einem rechteckigen Rahmen, der mit Rollen versehen ist, deren Radius kleiner als die Rahmenhöhe ist, dadurch gekennzeichnet, dass an jeder der beiden sich gegenüberliegenden Längsträger (1) des Rahmens mindestens vier gleich grosse Rollen (7 - 10) in zwei in Abstand voneinander angeordneten Gruppen (I, II) zusammengefasst und direkt im Längsträger (1) des Rahmens gelagert sind.

2. Transporteinrichtung mit mehreren verschieden langen Rolluntersätzen nach Anspruch 1, die mittels zwei parallel geführten Ketten (17, 18) eines Kettenförderers quer verschiebbar sind, dadurch gekennzeichnet, dass bei jedem Rolluntersatz auf beiden Seiten des Rahmens eine ausgewählte Rolle (7, 8a, 7b) der ersten Gruppe (I) vorhanden ist, deren Abstand von einer ausgewählten Rolle (10, 9a, 9b) der zweiten Gruppe (II) einen vorbestimmten, für alle Rolluntersätze gleichen Wert (a) besitzt.

3. Transporteinrichtung nach Anspruch 2, dadurch gekennzeichnet, dass der Abstand der ausgewählten Rollen der Entfernung (a) der Ketten (17, 18) des Kettenförderers entspricht.

4. Transporteinrichtung nach Anspruch 3, dadurch gekennzeichnet, dass die erste Gruppe (I) auf beiden Seiten des Rahmens zwei Rollen (7, 8) und die zweite Gruppe (II) auf beiden Seiten des Rahmens ebenfalls zwei Rollen (9, 10) aufweist, wobei der Abstand der beiden äusseren Rollen (7, 10) der beiden Gruppen (I, II) dem Abstand (a) der Ketten (17, 18) des Kettenförderers entspricht.

5. Transporteinrichtung nach Anspruch 3, dadurch gekennzeichnet, dass jede Gruppe (I, II) auf beiden Seiten des Rahmens je zwei Rollen (7a, 8a, bzw. 9a, 10a) aufweist, wobei der Abstand der beiden inneren Rollen (8a, 9a) der beiden Gruppen (I und II) dem Abstand (a) der Ketten (17, 18) entspricht.

6. Transporteinrichtung nach Anspruch 3, dadurch gekennzeichnet, dass in jeder Gruppe (I, II) auf beiden Seiten des Rahmens Rollen (7b, 8b, bzw. 9b, 10b) vorhanden sind, wobei der Abstand der äusseren Rolle (7b) der einen Gruppe (I) von der inneren Rolle (9b) der anderen Gruppe (II) dem Abstand (a) der Ketten (17, 18) entspricht.

FIG.1

FIG.2

FIG.3

FIG.4

FIG.5

**Europäisches Patentamt**

# EUROPÄISCHER RECHERCHENBERICHT

Nummer der Anmeldung

EP 90810382.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | <u>DE - A1 - 3 545 254</u><br>(TRANSIT)<br>* Fig. 1 *<br>-- | 1 | B 65 G 1/10//<br>B 65 G 7/04 |
| A | <u>FR - A - 2 207 844</u><br>(FARA)<br>* Fig. 1a *<br>-- | 1 | |
| D,A | <u>US - A - 3 558 152</u><br>(MILES)<br>* Fig. 1,2 *<br>-- | 1 | |
| D,A | <u>CH - A - 599 889</u><br>(WEELPAL)<br>* Fig. 2 *<br>-- | 1 | |
| A | <u>CH - A - 640 797</u><br>(SIBONNE)<br>* Fig. 1 *<br>---- | 2 | |

|  |  | RECHERCHIERTE SACHGEBIETE (Int Cl⁵) |
|---|---|---|
|  |  | B 62 B<br>B 65 G |

Der vorliegende Recherchenbericht wurde für alle Patentansprüche erstellt.

| Recherchenort | Abschlußdatum der Recherche | Prüfer |
|---|---|---|
| WIEN | 13-09-1990 | BAUMGARTNER |